# EUROPÄISCHE PATENTANMELDUNG

(11) **EP 3 599 015 A1**
(43) Veröffentlichungstag der Anmeldung: **29.01.2020**
(21) Anmeldenummer: 18185742.6
(22) Anmeldetag: 26.07.2018
(51) Int. Cl.: B01J 8/24, B01J 8/18, C10G 11/20

(54) **VERFAHREN ZUR ENDOTHERMEN KATALYTISCHEN UMSETZUNG VON VERKETTETEN AUSGANGSKOHLENWASSERSTOFFEN**

(71) Anmelder: Yncoris GmbH & Co. KG, 50354 Hürth (DE)
(72) Erfinder: Riße, Matthias, 50354 Hürth (DE); Harlacher, Thomas, Dr., 50354 Hürth (DE); Wilp, Christoph, 50354 Hürth (DE)
(74) Vertreter: Patentanwälte Bauer Vorberg Kayser

(57) **Zusammenfassung**

Die Erfindung betrifft ein Verfahren zur endothermen katalytischen Umsetzung von verketteten Ausgangskohlenwasserstoffen in verkettete Produktkohlenwasserstoffe, wobei ein gasförmiger Speisestrom (1) mit den Ausgangskohlenwasserstoffen durch einen Einlass (2) eines Reaktors (3a, b) in den Reaktor (3a, b) tritt, wobei ein Produktstrom (4) mit den Produktkohlenwasserstoffen durch einen Auslass (5) des Reaktors (3a, b) aus dem Reaktor (3a, b) tritt, wobei der Reaktor (3a, b) zur heterogenen Katalyse der endothermen Umsetzung der Ausgangskohlenwasserstoffe in die Produktkohlenwasserstoffe in einem Reaktionsabschnitt (6) entlang einer Reaktorstrecke (7) zwischen dem Einlass (2) und dem Auslass (5) in dem Reaktor (3a, b) einen Katalysator (8) als Feststoff aufweist, welcher Katalysator (8) von dem Speisestrom (1) als Prozessstrom durchströmt wird, wobei dem Reaktor (3a, b) zwischen dem Einlass (2) und dem Auslass (5) und beabstandet zu diesen ein Heizgas (9a, b) zur Temperaturerhöhung zugeführt wird. Das Verfahren ist dadurch gekennzeichnet, dass das Heizgas (9a, b) durch einen Heizeinlass (10a, b) des Reaktors (3a, b) in den Reaktor (3a, b) zur Vermischung mit dem Prozessstrom geführt wird. Ebenso betrifft die Erfindung einen entsprechenden Reaktor (3a, b) zur endothermen katalytischen Umsetzung von verketteten Ausgangskohlenwasserstoffen in verkettete Produktkohlenwasserstoffe.

## Beschreibung

Die Erfindung betrifft ein Verfahren zur endothermen katalytischen Umsetzung von verketteten Ausgangskohlenwasserstoffen gemäß dem Oberbegriff des Anspruchs 1 sowie einen Reaktor zur endothermen katalytischen Umsetzung von verketteten Ausgangskohlenwasserstoffen gemäß dem Oberbegriff des Anspruchs 15.

Bei aus dem Stand der Technik bekannten Verfahren zur endothermen katalytischen Umsetzung von verketteten Ausgangskohlenwasserstoffen in verkettete Produktkohlenwasserstoffe mit einem festen Katalysator ist es häufig wichtig, sowohl eine möglichst genaue Verweilzeit der Edukte und ggf. der Produkte im Bereich des Katalysators - und potenziell auch in Bereichen ohne Katalysator - als auch eine möglichst genaue Temperatur in diesem Bereich einzustellen. Das begründet sich darin, dass selbst bei vergleichsweise geringen Abweichungen dieser Parameter unterschiedliche Reaktionen mit entsprechend verschiedenen Produkten ablaufen können.

Speziell bei einer endothermen Umsetzung erfolgt prinzipiell eine Abkühlung im Reaktor entlang der vom Ausgangsstoff durchströmten Strecke, wobei diese Abkühlung bereits dazu führen kann, dass innerhalb der Verweilzeit der angestrebte Temperaturbereich verlassen wird. Ein Herausführen des Produktstroms aus dem Reaktor zwecks Erhitzung außerhalb des Reaktors verbietet sich dann häufig deswegen, weil dies das Erreichen der gewünschten Verweilzeit im Katalysator unterbricht.

Ein möglicher Ansatz zur Kompensation dieser Abkühlung besteht darin, einen in dem Reaktor liegenden Wärmeübertrager vorzusehen, welcher dann von einem Heizfluid durchströmt werden kann. Nachteilig an diesem Ansatz ist jedoch, dass zum Erreichen einer ausreichenden Erhitzung eine so große Temperaturdifferenz gewählt werden muss, dass es umgekehrt zu lokalen Hotspots am Wärmeübertrager mit wiederum zu hoher Temperatur kommen kann. Hinzu kommt, dass ein zum Erreichen von Homogenität mit vielen Rohren ausgestatteter Wärmeübertrager die Verwirbelung zwischen dem Speisestrom und dem Katalysator im Reaktor und somit den Ablauf der Reaktion stören kann.

Ausgehend von diesem Stand der Technik besteht daher die Aufgabe der Erfindung darin, bei der endothermen katalytischen Umsetzung von verketteten Ausgangskohlenwasserstoffen in verkettete Produktkohlenwasserstoffe eine Kompensation der Abkühlung im Reaktor zu ermöglichen, welche sowohl Hotspots vermeidet als auch die Umsetzungsreaktion möglichst wenig stört.

Bezogen auf ein Verfahren zur endothermen katalytischen Umsetzung von verketteten Ausgangskohlenwasserstoffen mit den Merkmalen des Oberbegriffs von Anspruch 1 wird die Aufgabe durch die Merkmale des kennzeichnenden Teils von Anspruch 1 gelöst. Bezogen auf einen Reaktor zur endothermen katalytischen Umsetzung von verketteten Ausgangskohlenwasserstoffen mit den Merkmalen des Oberbegriffs von Anspruch 15 wird die Aufgabe durch die Merkmale des kennzeichnenden Teils von Anspruch 15 gelöst.

Wesentlich für die Erfindung ist die Erkenntnis, dass eine Kompensation der verlorenen Hitze im Reaktor, welche Kompensation sowohl sehr rasch erfolgt, dabei Hotspots vermeidet und gleichzeitig den Kontakt der Reaktionsteilnehmer mit dem Katalysator nicht wesentlich stört, dadurch erreicht werden kann, dass ein Heizgas in den Reaktor zur Vermischung mit dem Gas im Reaktor geführt werden kann.

Das erfindungsgemäße Verfahren dient der endothermen katalytischen Umsetzung von verketteten Ausgangskohlenwasserstoffen in verkettete Produktkohlenwasserstoffe.

Unter verketteten Ausgangs- bzw. Produktkohlenwasserstoffen sind vorliegend jeweilige Kohlenwasserstoffe mit einer Kette von mindestens drei Kohlenstoffatomen zu verstehen. Folglich ist der Zweck der Umsetzung, aus den Ausgangskohlenwasserstoffen die Produktkohlenwasserstoffe zu erhalten. Es kann aber sein, dass aus praktischen Gründen zwingend neben den gewünschten Reaktionen zu einem geringeren oder größeren Teil auch andere, ggf. sekundäre Reaktionen - katalysiert oder nicht-katalysiert - auftreten, sodass dann zwangsläufig die Ausgangskohlenwasserstoffe zumindest teilweise auch in andere Stoffe als die Produktkohlenwasserstoffe umgewandelt werden.

Das erfindungsgemäße Verfahren sieht weiter vor, dass ein gasförmiger Speisestrom mit den Ausgangskohlenwasserstoffen durch einen Einlass eines Reaktors in den Reaktor tritt und dass ein Produktstrom mit den Produktkohlenwasserstoffen durch einen Auslass des Reaktors aus dem Reaktor tritt. Der Speisestrom kann neben den Ausgangskohlenwasserstoffen insbesondere ein Trägergas sowie ggf. weitere Bestandteile umfassen.

Dabei weist der Reaktor erfindungsgemäß zur heterogenen Katalyse der endothermen Umsetzung der Ausgangskohlenwasserstoffe in die Produktkohlenwasserstoffe einen Katalysator als Feststoff auf. Dieser Katalysator ist erfindungsgemäß in einem Reaktionsabschnitt entlang einer Reaktorstrecke zwischen dem Einlass und dem Auslass angeordnet - wobei die Reaktorstrecke in dem Reaktor ist - und wird von dem Speisestrom als Prozessstrom durchströmt. Mit anderen Worten kann die Strecke im Reaktor zwischen dem Einlass und dem Auslass als Reaktorstrecke bezeichnet werden, wobei derjenige Teil der Reaktorstrecke mit Katalysator den Reaktionsabschnitt bildet. Der Prozessstrom ist dann einfach die Bezeichnung des Speisestroms innerhalb des Reaktors unter Berücksichtigung der sukzessive im Reaktor erfolgenden Reaktionen des Speisestroms und unter Berücksichtigung ggf. weiterer zugeführter Stoffe, insbesondere des nachstehend beschriebenen Heizgases.

Entsprechend wird weiter erfindungsgemäß dem Reaktor zwischen dem Einlass und dem Auslass und beabstandet zu diesen - also sowohl zu dem Einlass als auch zu dem Auslass - ein Heizgas zur Temperaturerhöhung zugeführt. Diese Temperaturerhöhung bezieht sich auf den Reaktor bzw. auf den Speisestrom im Reaktor.

Das erfindungsgemäße Verfahren ist nun dadurch gekennzeichnet, dass das Heizgas durch einen Heizeinlass des Reaktors in den Reaktor zur Vermischung mit dem Prozessstrom geführt wird.

Bei dem Heizeinlass kann es sich grundsätzlich um den einzigen solchen Heizeinlass handeln. Eine bevorzugte Ausführungsform des Verfahrens ist jedoch dadurch gekennzeichnet, dass der Reaktor eine Vielzahl von entlang der Reaktorstrecke angeordneten und zueinander beabstandeten Heizeinlässen aufweist, durch welche ein jeweiliges Heizgas in den Reaktor zur Vermischung mit dem Prozessstrom geführt wird. Dies erlaubt eine noch feinere Kompensation der Abkühlung im Reaktor. Es kann dann sein, dass die jeweiligen Heizgase der Heizeinlässe aus der Verzweigung eines gemeinsamen Heizgasstroms gewonnen werden. Dies gewährleistet eine Homogenität des Heizgases für alle Heizeinlässe. Ebenso kann es sein, dass der gemeinsame Heizgasstrom einem Kompressor zur Druckerhöhung zugeführt, sodass die jeweiligen Heizgase von demselben Kompressor eine Druckerhöhung erfahren. Auf diese Weise kann die Anzahl der Kompressoren verringert werden, was auch die Gesamtkosten für die Druckerhöhung minimiert.

Weiter ist bevorzugt, dass das Heizgas bzw. die Heizgase oder der gemeinsame Heizgasstrom durch einen außerhalb des Reaktors angeordneten Wärmetauscher aufgeheizt wird.

Eine weitere bevorzugte Ausführungsform des Verfahrens ist dadurch gekennzeichnet, dass der Katalysator feinkörnig ausgebildet ist, sodass der Katalysator durch den Prozessstrom eine Wirbelschicht bildet.

Gemäß einer bevorzugten Ausführungsform des Verfahrens ist vorgesehen, dass der Katalysator in dem Reaktionsabschnitt so angeordnet ist, dass die Raumgeschwindigkeit des Prozessstroms bezogen auf den Katalysator entlang der Reaktorstrecke im Wesentlichen konstant ist. Dies führt zu einer im Wesentlichen konstanten Verweilzeit des Prozessstroms, ggf. auch außerhalb des Reaktionsabschnitts, sodass sichergestellt werden kann, dass ausschlißlich oder überwiegend die gewünschten Reaktionen ablaufen.

Eine solche im Wesentlichen konstante Raumgeschwindigkeit kann auf verschiedene Arten erreicht werden. Eine erste bevorzugte Variante sieht vor, dass eine auf die Reaktorstrecke bezogene Querschnittsfläche des Reaktors entlang der Reaktorstrecke im Wesentlichen gleichbleibt und dass die Reaktorstrecke durch die Heizeinlässe in Reaktorabschnitte unterteilt wird, deren Länge ab jedem Heizeinlass im Wesentlichen proportional zu dem Volumenstrom des durch den jeweiligen Heizeinlass in den Reaktor geführten jeweiligen Heizgases zunimmt. Der Bezug der Querschnittsfläche auf die Reaktorstrecke bedeutet, dass die Querschnittsfläche quer zu durch die Reaktorstrecke definierten Richtung ausgerichtet ist. Diese Richtung verläuft vom Einlass zum Auslass. Mit anderen Worten führt die Zuführung des Heizgases ab Heizeinlasses mittelbar zu einer Erhöhung der Gasgeschwindigkeit des Prozessstroms, was durch eine Erhöhung des Abstands zum nächsten Heizeinlass ausgeglichen wird.

Eine zweite bevorzugte Variante sieht hingegen vor, dass die Reaktorstrecke durch die Heizeinlässe in im Wesentlichen gleich lange Reaktorabschnitte unterteilt wird und dass eine auf die Reaktorstrecke bezogene Querschnittsfläche des Reaktors ab jedem Heizeinlass im Wesentlichen proportional zu dem Volumenstrom des durch den jeweiligen Heizeinlass in den Reaktor geführten jeweiligen Heizgases zunimmt. Hier ist es weiter bevorzugt, dass eine Gasgeschwindigkeit des Prozessstroms entlang der Reaktorstrecke im Wesentlichen konstant ist. Somit kann die Gasgeschwindigkeit im Reaktor begrenzt werden, was ein Überschreiten der Lockerungsgeschwindigkeit eines geschütteten Katalysators und damit ein Mitschleppen von Katalysatorpartikeln bzw. eine Rückvermischung des Katalysators oberhalb von Heizeinlässen verhindert.

Eine bevorzugte Ausführungsform des Verfahrens ist dadurch gekennzeichnet, dass die Zufuhr des Heizgases, vorzugsweise der Heizgase, einen Temperaturabfall in dem Reaktionsabschnitt durch die endotherme Umsetzung so weit kompensiert, dass die Temperatur in dem gesamten Reaktionsabschnitt um weniger als 40° C, vorzugsweise um weniger als 30° C und insbesondere um weniger als 20° C von einem vorbestimmten Sollreaktionstemperaturbereich abweicht. Ebenso kann sich diese Abweichung statt auf einen Sollreaktionstemperaturbereich auf eine vorbestimmte Sollreaktionstemperatur beziehen. Insbesondere kann es sich bei dieser Sollreaktionstemperatur um eine Temperatur von bis zu 700° C handeln. Speziell kann die Sollreaktionstemperatur zwischen 350° C und 700° C, insbesondere zwischen 350° C und 600° C und weiter insbesondere zwischen 400° C und 600° C betragen. Ebenso kann der Sollreaktionstemperaturbereich der Temperaturbereich bis zu 700° C, der Temperaturbereich zwischen 350° C und 700° V, der Temperaturbereich zwischen 350° C und 600° C oder der Temperaturbereich zwischen 400° C und 600° C sein. Bevorzugt ist weiter, dass das Heizgas mit einer Eintrittstemperatur eintritt, welche um weniger als 50° C von dem vorbestimmten Sollreaktionstemperaturbereich oder von der vorbestimmten Sollreaktionstemperatur abweicht.

Hinsichtlich des Drucks in dem Reaktor und insbesondere in dem Reaktionsabschnitt ist es bevorzugt, dass ein Druck größer als 0,5 bar und kleiner als 10 bar, vorzugsweise kleiner als 5 bar und insbesondere kleiner als 2 bar herrscht. Speziell kann es sein, dass in dem Reaktor und insbesondere in dem Reaktionsabschnitt im Wesentlichen Normaldruck vorliegt.

Grundsätzlich kann der Reaktor beliebig ausgerichtet sein, so auch horizontal. Eine bevorzugte Ausführungsform des Verfahrens ist jedoch dadurch gekennzeichnet, dass der Einlass, der Auslass und der Heizeinlass, vorzugsweise die Heizeinlässe, jeweils auf unterschiedlichen vertikalen Höhen angeordnet sind. Ebenso ist es bevorzugt, dass der Reaktor im Wesentlichen vertikal ausgerichtet ist, sodass die Reaktorstrecke im Wesentlichen vertikal verläuft. Insbesondere kann es sein, dass der Einlass vertikal unterhalb des Auslasses angeordnet ist.

Eine bevorzugte Ausführungsform des Verfahrens ist dadurch gekennzeichnet, dass der Katalysator in dem Reaktor als vorzugsweise stationäre oder quasi-stationäre Schüttung angeordnet ist. Das bedeutet, dass der Katalysator in seiner Anordnung insgesamt über einen längeren Zeitraum stationär und nicht in kontinuierlicher oder quasi-kontinuierlicher Art bewegt wird. Weiter kann es sein, dass der Katalysator als Schüttung in mehreren getrennten, vorzugsweise vertikal beabstandeten, Katalysatorschichten angeordnet ist. Diese Anordnung wird auch als die eines Mehrebenen-Reaktors bezeichnet.

Eine weitere bevorzugte Ausführungsform des Verfahrens ist dadurch gekennzeichnet, dass der Katalysator in dem Reaktor als Schüttung angeordnet ist, wobei an einem vertikal unteren Ende des Reaktors insbesondere deaktivierter Katalysator sukzessive abgeführt und an einem vertikal oberen Ende des Reaktors frischer Katalysator zugeführt wird. Vorzugsweise wird dabei der frische Katalysator aus einer Anordnung zur Regeneration von deaktiviertem Katalysator zugeführt. Diese Variante erlaubt eine Regeneration des Katalysators ohne Unterbrechung der Umsetzung im Reaktor.

Gemäß einer bevorzugten Ausführungsform des Verfahren ist vorgesehen, dass bei der Umsetzung der Ausgangskohlenwasserstoffe in die Produktkohlenwasserstoffe auftretende Reaktionen eine auf die Masse bezogene Bruttoreaktionsenthalpie von mindestens 20 kJ/kg, vorzugsweise von mindestens 30 kJ/kg und insbesondere von mindestens 50 kJ/kg aufweisen. Alternativ oder zusätzlich kann es sein, dass diese Bruttoreaktionsenthalpie weniger als 200 kJ/kg, vorzugsweise weniger als 150 kJ/kg und insbesondere weniger als 100 kJ/kg beträgt. Diese Reaktionen umfassen nicht nur die eigentlich gewünschte primäre und katalysierte Spaltreaktion, sondern auch katalysierte und nicht-katalysierte sekundäre Spaltreaktionen und alle sonstigen im Reaktor auftretenden Reaktionen. Folglich können einzelne dieser Reaktionen auch exotherm sein.

Eine bevorzugte Ausführungsform des Verfahrens ist dadurch gekennzeichnet, dass die Ausgangskohlenwasserstoffe jeweils Ketten mit mehr als 12 Kohlenstoffatomen aufweisen und dass die Produktkohlenwasserstoffe jeweils Ketten mit zwischen 6 und 18 Kohlenstoffatomen aufweisen. Gerade bei der katalytischen Umsetzung dieser Ausgangskohlenwasserstoffe kann es auch zu nichtkatalysierten, sekundären Spaltreaktionen und damit zu Produkten mit Kohlenstoffkettenlängen unter 6 kommen. Durch die vorschlagsgemäße Lösung kann deren Anteil weitgehend reduziert werden. Bevorzugt ist es, dass Produktkohlenwasserstoffe überwiegend in einer Flüssigphase im Produktstrom vorliegen. Ebenso ist es bevorzugt, dass der Massenstrom der Produktkohlenwasserstoffe im Produktstrom mindestens 25 % des Massenstroms der Ausgangskohlenwasserstoffe im Speisestrom beträgt.

Eine weitere bevorzugte Ausführungsform des Verfahrens ist dadurch gekennzeichnet, dass das Heizgas, vorzugsweise die Heizgase, einen Heizgasstoff aufweist welcher bezogen auf die katalytische Umsetzung der Ausgangskohlenwasserstoffe in die Produktkohlenwasserstoffe inert ist. Das bedeutet, dass der Heizgasstoff an keiner der mit diesem Vorgang verbundenen Reaktionen - gemäß den obigen Anmerkungen zur Bruttoreaktionsenthalpie - beteiligt ist. Insbesondere kann es sein, dass das Heizgas bzw. die Heizgase im Wesentlichen aus dem Heizgasstoff bestehen. Bevorzugt ist, dass der Heizgasstoff Stickstoff, Kohlenstoffdioxid, niedrige Kohlenwasserstoffe kleiner C4, Kohlenstoffmonoxid und/oder Wasser umfasst. Ebenso kann es sein, dass der Heizgasstoff aus einem oder mehreren dieser Stoffe besteht. Grundsätzlich ist der Fachmann bestrebt, das Volumen des Prozessstroms in der Verarbeitung möglichst gering zu halten, da der Zusatz von inerten Bestandteilen prinzipiell für die gewünschten Reaktionen keine vorteilhafte Wirkung bietet und eine größere Dimensionierung aller Leitungen und sonstigen Komponenten wie z. B. Kompressoren erfordert, welche Dimensionierung regelmäßig einen wesentlichen Faktor für die Gesamtkosten der entsprechenden Anlage bildet. Ebenso kann es erforderlich sein, diese zusätzlichen inerten Bestandteile in einem speziellen Prozessschritt wieder abzutrennen. Es hat sich aber herausgestellt, dass diese Nachteile durch die vorschlagsgemäßen Vorteile, insbesondere die sehr homogene und rasche Kompensation der Temperaturverluste im Reaktor, mehr als ausgeglichen werden, und zwar auch bei einem inerten Heizgas.

Gemäß einer bevorzugten Ausführungsform des Verfahrens ist vorgesehen, dass der Produktstrom einer Kondensationsstufe zum zumindest teilweisen Abtrennen der Produktkohlenwasserstoffe zugeführt wird, dass aus der Kondensationsstufe ein rezyklierter Strom mit unreagierten Ausgangskohlenwasserstoffen gewonnen wird und dass das Heizgas - oder die Heizgase - den rezyklierten Strom umfasst. Das Heizgas bzw. die Heizgase können auch aus dem rezyklierten Strom bestehen. Ein solches Rezyklieren ist insbesondere dann sinnvoll, wenn nach Durchlauf des Reaktors noch unreagierte Ausgangskohlenwasserstoffe in erheblichem Umfang vorhanden sind, wobei dann deren erhitzte Rückführung in den Reaktor zwecks Umwandlung sowohl die Ausbeute durch die Umwandlung erhöht als auch die vorschlagsgemäße Temperaturkompensation ermöglicht, ohne dass prozessfremdes Gas verwendet werden muss.

Der erfindungsgemäße Reaktor dient der endothermen katalytischen Umsetzung von verketteten Ausgangskohlenwasserstoffen in verkettete Produktkohlenwasserstoffe und weist einen Einlass für den Eintritt eines gasförmigen Speisestroms mit den Ausgangskohlenwasserstoffen, einen Auslass für des Austritt eines Produktstroms mit den Produktkohlenwasserstoffen und einen Katalysator als Feststoff zur heterogenen Katalyse der endothermen Umsetzung der Ausgangskohlenwasserstoffe in die Produktkohlenwasserstoffe auf. Erfindungsgemäß ist der Katalysator in einem Reaktionsabschnitt angeordnet, welcher entlang einer Reaktorstrecke zwischen dem Einlass und dem Auslass in dem Reaktor verläuft und wobei der Katalysator von dem Speisestrom als Prozessstrom durchströmt wird.

Der erfindungsgemäße Reaktor ist dadurch gekennzeichnet, dass der Reaktor einen zwischen dem Einlass und dem Auslass angeordneten und zu diesen beabstandeten Heizeinlass zur Zuführung eines Heizgases, welches der Temperaturerhöhung dient, in den Reaktor zur Vermischung mit dem Prozessstrom aufweist.

Weitere Merkmale, Ausgestaltungen und bevorzugte Ausführungsformen des erfindungsgemäßen Reaktors entsprechen denjenigen des erfindungsgemäßen Verfahrens und umgekehrt.

Weitere vorteilhafte und bevorzugte Merkmale und Ausgestaltungen ergeben sich aus der nachfolgenden Beschreibung mit Bezug auf die Figuren. In der lediglich Ausführungsbeispiele wiedergebenden Zeichnung zeigt
- Fig. 1: eine schematische Ansicht eines vorschlagsgemäßen Reaktors gemäß einem ersten Ausführungsbeispiel und
- Fig. 2: eine schematische Ansicht eines vorschlagsgemäßen Reaktors gemäß einem zweiten Ausführungsbeispiel.

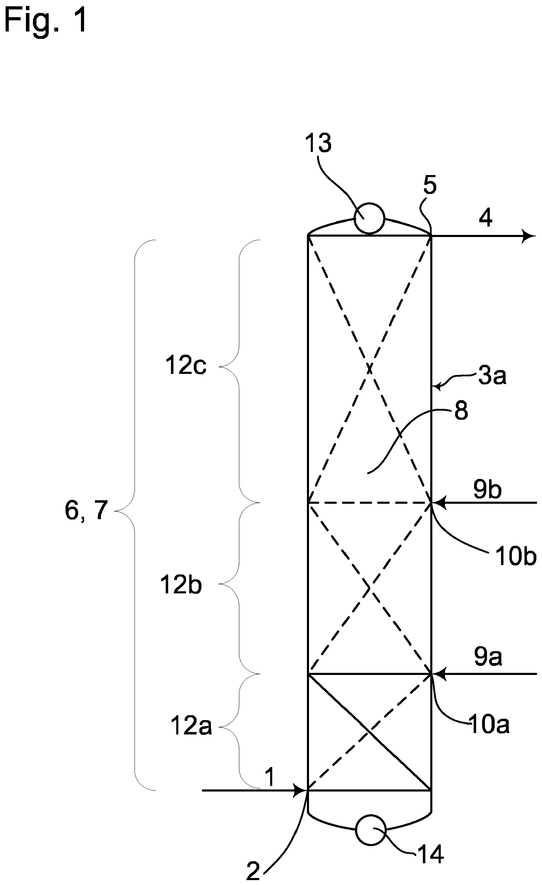

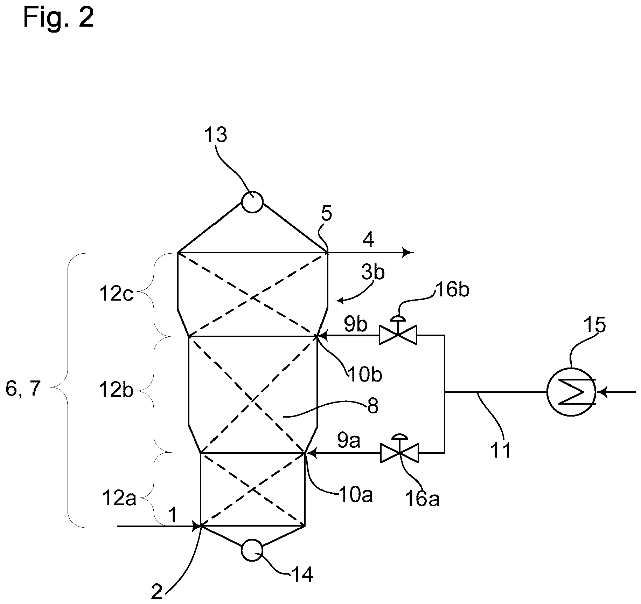

Die beiden jeweils in den Fig. 1 und 2 dargestellten Reaktoren 3a, b sind eingerichtet zur endothermen katalytischen Umsetzung von langkettigen Kohlenwasserstoffen mit einer Kohlenstoffkettenlänge größer als 12 - der Ausgangskohlenwasserstoffe - zu Kohlenwasserstoffen mit einer Kohlenstoffkettenlänge zwischen 6 und 10 - den Produktkohlenwasserstoffen. Bei dem in den Reaktoren 3a, b angeordneten Katalysator 8 erfolgt in einem Sollreaktionstemperaturbereich zwischen 400° C und 550° C sowie in einem Zielbereich der Verweilzeit der Ausgangskohlenwasserstoffe als primäre Spaltreaktion deren Umsetzung zu den Produktkohlenwasserstoffen. Beide Reaktoren 3a, b sind auch jeweils zur Ausführung des vorschlagsgemäßen Verfahrens eingerichtet. Bei wesentlichen Abweichungen der Verweilzeit gegenüber dem Zielbereich oder der Temperatur im Reaktor von dem Sollreaktionstemperaturbereich treten verstärkt nicht-katalysierte, sekundäre Spaltreaktionen auf, bei deren Produkten es sich in erster Linie um Kohlenwasserstoffe mit Kohlenstoffkettenlängen von weniger als 6 handelt und welche hier nicht erwünscht sind. Daher ist es vorteilhaft, die Verweilzeit und die Temperatur möglichst eng in einem definierten Bereich zu halten.

Bei dem in der Fig. 1 dargestellten Reaktor 3a tritt ein Speisestrom 1, welcher ein Trägergas sowie die Ausgangskohlenwasserstoffe in einer Gasphase umfasst, durch einen Einlass 2 des Reaktors 3a in den Reaktor 3a. In dem Reaktor 3a strömt der Speisestrom 1, welcher innerhalb des Reaktors 3a gemeinsam mit ihm ggf. zugeführten Bestandteilen als Prozessstrom bezeichnet wird, durch einen Reaktionsabschnitt 6, in welchem ein Katalysator 8 als Feststoff - hier als Granulat - in einer Schüttung angeordnet ist bis zu einem Auslass 5 des Reaktors 3a, aus welchem der Prozessstrom dann als Produktstrom 4 mit den Produktkohlenwasserstoffen tritt. Dieser Produktstrom 4 weist neben den Produktkohlenwasserstoffen unreagierte Ausgangskohlenwasserstoffe, das Trägergas, Inertgase sowie zu einem kleinen Teil die Produkte der oben beschriebenen, nichtkatalysierten und sekundären Spaltreaktionen auf.

Zur Regeneration des Katalysators 8 weist der Reaktor 3a einen Katalysatorauslass 14 an seinem unteren Ende auf, durch welchen in einem quasikontinuierlichen Prozess deaktivierter Katalysator 8 abgeführt und einer hier nicht dargestellten Regeneration zugeführt wird. Regenerierter und damit frischer Katalysator 8 wird dem Reaktor 3a in einem dem Abführen entsprechenden, ebenfalls quasi-kontinuierlichem Prozess durch einen Katalysatoreinlass 13 an seinem oberen Ende zugeführt. Auf diese Weise kann der Katalysator 8 fortlaufend regeneriert werden, ohne dass eine Außerbetriebnahme des Reaktors 3a erforderlich wäre.

Der in dem Reaktor 3a von dem Einlass 2 zu dem Auslass 5 strömende Gasstrom entspricht zunächst in seiner Zusammensetzung dem eintretenden Speisestrom 1 bevor er als Produktstrom 4 aus dem Auslass 5 tritt. Die Bestandteile dieses Gasstroms - also des Prozessstroms - durchlaufen beim Durchströmen die oben beschriebenen Reaktionen. Der Prozessstrom weist entsprechend im Reaktor 3a u.a. durch diese Umwandlung eine sich ändernde Zusammensetzung auf. Der Prozessstrom legt dabei im Reaktor 3a eine Reaktorstrecke 7 zurück, welche als Strömungsweg zwischen dem Einlass 2 und dem Auslass 5 definiert ist. Im vorliegenden Ausführungsbeispiel ist der Katalysator 8 in einem Reaktionsabschnitt 6 angeordnet, welcher sich entlang der gesamten Reaktorstrecke 7 erstreckt.

Alternativ wäre es auch denkbar, dass in bestimmten Bereichen der Reaktorstrecke 7 kein Katalysator 8 angeordnet ist, der Reaktionsabschnitt 6 also kürzer ist als die Reaktorstrecke 7.

Der Reaktor 3a weist ferner einen ersten Heizeinlass 10a und einen zweiten Heizeinlass 10b auf, durch den jeweils ein erstes Heizgas 9a und ein zweites Heizgas 8b in den Reaktor 3a geführt wird. Das Heizgas weist eine Temperatur auf, welche höher ist als der Sollreaktionstemperaturbereich. Im Reaktor vermischen sich die Heizgase 9a, b mit dem Prozessstrom und bilden dann dementsprechend auch einen Teil des Prozessstroms. Die beiden Heizeinlässe 10a, b sind entlang der Reaktorstrecke 7 sowie beabstandet zu dem Einlass 1 und dem Auslass 5 angeordnet. Da die oben beschriebene primäre Spaltreaktion endotherm ist, verringert sich insbesondere deswegen die Temperatur im Reaktor 3a zunächst ausgehend von dem Einlass 1 entlang der Reaktorstrecke 7, sodass der Sollreaktionstemperaturbereich durch diesen Effekt verlassen werden könnte. Die Zufuhr des Heizgase 9a, b kompensiert nun den jeweiligen Temperaturverlust, welcher aufgrund der endothermen Reaktion bzw. der endothermen Reaktionen auf der Reaktorstrecke 7 seit dem Eintritt des Speisestroms 1 durch den Einlass 2 bzw. seit der unmittelbar vorangehenden kompensierenden Zufuhr von Heizgas 9a, b durch den jeweiligen Heizeinlass 10a, b an dem Prozessstrom eingetreten ist. Die Zahl und Position der Heizeinlässe 10a, b - in beiden Ausführungsbeispiel zwei - unterteilt nun die Reaktorstrecke 7 in eine bestimmte Zahl - hier also jeweils drei - von Reaktorabschnitten 12a-c.

Die Vermischung des Heizgases 9a, b mit dem Prozessstrom sorgt für eine rasche und homogene Temperaturaufnahme durch den Prozessstrom und verhindert das Entstehen von Hotspots, also von lokalen Temperaturspitzen jenseits eines Grenzwerts. Ebenso folgt aus der Vermischung eine Vergrößerung des Volumenstroms im Reaktor 3a, da der Prozessstrom im Reaktor 3a nach Zugabe des Heizgases 9a eine größere Stoffmenge aufweist.

Nach Austritt durch den Auslass 5 wird der Produktstrom 4 einer - hier nicht dargestellten - Kondensationsstufe zugeführt, in welcher die Produktkohlenwasserstoffe aus dem Prozessstrom 4 abgetrennt werden. Nach Abtrennung der Produktkohlenwasserstoffe wird ein Teil des Restgases, welches auch noch unreagierte Ausgangskohlenwasserstoffe umfasst, verwendet, um einen Teil der Heizgase 9a, b zu bilden, wobei der Rest der Heizgase 9a, b durch Stickstoff gebildet wird.

Im Falle des Reaktors 3a des ersten Ausführungsbeispiels, welcher entlang der Reaktorstrecke 7 eine auf diese bezogene im Wesentlichen konstante Querschnittsfläche aufweist, wird durch die beiden Heizeinlässe 10a, b ein im Wesentlichen gleich großer Volumenstrom an Heizgas 9a, b in den Reaktor 3a geführt. Die entsprechende Erhöhung der Stoffmenge des Prozessstroms führt daher zu einer Erhöhung der Gasgeschwindigkeit. Da die durch die endotherme Reaktion bedingte Temperaturabnahme im Wesentlichen proportional zu der im Reaktionsabschnitt 6 - also im Bereich des Katalysators 8 - verbrachten Zeit ist, ist beim Reaktor 3a des ersten Ausführungsbeispiels die Länge des ersten Reaktorabschnitts 12a der Reaktorstrecke 7 bis zum ersten Heizeinlass 10a entsprechend kürzer als die Länge des zweiten Reaktorabschnitts 12b zwischen dem ersten Heizeinlass 10a und dem zweiten Heizeinlass 10b und diese wiederum kürzer als die Länge des dritten Reaktorabschnitts 12c zwischen dem zweiten Heizeinlass 10b und dem Auslass 5. Auf diese Weise ist die Verweilzeit, welche der Prozessstrom in jedem dieser Reaktorabschnitte 12a-c verbringt im Wesentlichen konstant - ebenso wie deren Kehrwert die Raumgeschwindigkeit - und zwar im Gegensatz zur eben nicht konstanten Gasgeschwindigkeit. Der bis zum Austritt oder bis zur Kompensation durch das Heizgas 9a, b eingetretene Temperaturverlust ist dann auch für jeden Reaktorabschnitt 12a-c im Wesentlichen gleich.

Der Reaktor 3b des zweiten Ausführungsbeispiels entspricht grundsätzlich dem Reaktor 3a des ersten Ausführungsbeispiels, weist dabei aber die nachfolgend beschriebenen Unterschiede auf. Die durch den Einlass 2, den Auslass 5 und die Heizeinlässe 10a, b definierten Reaktorabschnitte 12a-c sind bei dem Reaktor 3b des zweiten Ausführungsbeispiels im Wesentlichen gleich lang, weisen aber jeweils unterschiedliche, auf die Reaktorstrecke 7 bezogene Querschnittsflächen auf. Und zwar nehmen diese Querschnittsflächen ab jedem Heizeinlass 10a, b im Verhältnis zu dem Volumenstrom des durch den jeweiligen Heizeinlass 10a, b zugeführten Heizgases 9a, b zu. Im Ergebnis bleibt dadurch nicht nur - wie beim ersten Ausführungsbeispiel - die Verweilzeit im Wesentlichen konstant, sondern auch - im Unterschied zu dem ersten Ausführungsbeispiel - die Gasgeschwindigkeit des Prozessstroms im Reaktor 3b.

Im zweiten Ausführungsbeispiel handelt es sich bei beiden Heizgasen 9a, b um Abzweigungen eines gemeinsamen Heizgasstroms 11, welcher durch einen Wärmetauscher 15 außerhalb des Reaktors 3b aufgeheizt wird. Durch Ventile 16a, b können die beiden Heizgase 9a, b in ihrem Volumenstrom zueinander eingestellt werden.

## Patentansprüche

1. Verfahren zur endothermen katalytischen Umsetzung von verketteten Ausgangskohlenwasserstoffen in verkettete Produktkohlenwasserstoffe, wobei ein gasförmiger Speisestrom (1) mit den Ausgangskohlenwasserstoffen durch einen Einlass (2) eines Reaktors (3a, b) in den Reaktor (3a, b) tritt, wobei ein Produktstrom (4) mit den Produktkohlenwasserstoffen durch einen Auslass (5) des Reaktors (3a, b) aus dem Reaktor (3a, b) tritt, wobei der Reaktor (3a, b) zur heterogenen Katalyse der endothermen Umsetzung der Ausgangskohlenwasserstoffe in die Produktkohlenwasserstoffe in einem Reaktionsabschnitt (6) entlang einer Reaktorstrecke (7) zwischen dem Einlass (2) und dem Auslass (5) in dem Reaktor (3a, b) einen Katalysator (8) als Feststoff aufweist, welcher Katalysator (8) von dem Speisestrom (1) als Prozessstrom durchströmt wird, wobei dem Reaktor (3a, b) zwischen dem Einlass (2) und dem Auslass (5) und beabstandet zu diesen ein Heizgas (9a, b) zur Temperaturerhöhung zugeführt wird, **dadurch gekennzeichnet, dass** das Heizgas (9a, b) durch einen Heizeinlass (10a, b) des Reaktors (3a, b) in den Reaktor (3a, b) zur Vermischung mit dem Prozessstrom geführt wird.

2. Verfahren nach Anspruch 1, **dadurch gekennzeichnet, dass** der Reaktor (3a, b) eine Vielzahl von entlang der Reaktorstrecke (7) angeordneten und zueinander beabstandeten Heizeinlässen (10a, b) aufweist, durch welche ein jeweiliges Heizgas (9a, b) in den Reaktor (3a, b) zur Vermischung mit dem Prozessstrom geführt wird, vorzugsweise, dass die jeweiligen Heizgase (9a, b) der Heizeinlässe (10a, b) aus der Verzweigung eines gemeinsamen Heizgasstroms (11) gewonnen werden.

3. Verfahren nach einem der Ansprüche 1 bis 2, **dadurch gekennzeichnet, dass** der Katalysator (8) feinkörnig ausgebildet ist, sodass der Katalysator (8) durch den Prozessstrom eine Wirbelschicht bildet.

4. Verfahren nach einem der Ansprüche 1 bis 3, **dadurch gekennzeichnet, dass** der Katalysator (8) in dem Reaktionsabschnitt (6) so angeordnet ist, dass die Raumgeschwindigkeit des Prozessstroms bezogen auf den Katalysator (8) entlang der Reaktorstrecke (7) im Wesentlichen konstant ist.

5. Verfahren nach Anspruch 4, **dadurch gekennzeichnet, dass** die Reaktorstrecke (7) durch die Heizeinlässe (10a, b) in im Wesentlichen gleich lange Reaktorabschnitte (12a-c) unterteilt wird und dass eine auf die Reaktorstrecke (7) bezogene Querschnittsfläche des Reaktors (3a) ab jedem Heizeinlass (10a, b) im Wesentlichen proportional zu dem Volumenstrom des durch den jeweiligen Heizeinlass (10a, b) in den Reaktor (3a) geführten jeweiligen Heizgases (9a, b) zunimmt.

6. Verfahren nach Anspruch 4, **dadurch gekennzeichnet, dass** eine auf die Reaktorstrecke (7) bezogene Querschnittsfläche des Reaktors (3b) entlang der Reaktorstrecke (7) im Wesentlichen gleichbleibt und dass die Reaktorstrecke (7) durch die Heizeinlässe (10a, b) in Reaktorabschnitte (12a-c) unterteilt wird, deren Länge ab jedem Heizeinlass (10a, b) im Wesentlichen proportional zu dem Volumenstrom des durch den jeweiligen Heizeinlass (10a, b) in den Reaktor (3b) geführten jeweiligen Heizgases (9a, b) zunimmt, vorzugsweise, dass eine Gasgeschwindigkeit des Prozessstroms entlang der Reaktorstrecke (7) im Wesentlichen konstant ist.

7. Verfahren nach einem der Ansprüche 1 bis 6, **dadurch gekennzeichnet, dass** die Zufuhr des Heizgases (9a, b), vorzugsweise der Heizgase (9a, b), einen Temperaturabfall in dem Reaktionsabschnitt (6) durch die endotherme Umsetzung so weit kompensiert, dass die Temperatur in dem gesamten Reaktionsabschnitt (6) um weniger als 40° C von einem vorbestimmten Sollreaktionstemperaturbereich, insbesondere von einer vorbestimmten Sollreaktionstemperatur, abweicht, weiter vorzugsweise, wobei die Sollreaktionstemperatur eine Temperatur zwischen 400° C und 500° C ist.

8. Verfahren nach Anspruch 7, **dadurch gekennzeichnet, dass** der Einlass (2), der Auslass (5) und der Heizeinlass (10a, b), vorzugsweise die Heizeinlässe (10a, b), jeweils auf unterschiedlichen vertikalen Höhen angeordnet sind, vorzugsweise, dass der Reaktor (3a, b) im Wesentlichen vertikal ausgerichtet ist, sodass die Reaktorstrecke (7) im Wesentlichen vertikal verläuft, insbesondere, dass der Einlass (2) vertikal unterhalb des Auslasses (5) angeordnet ist.

9. Verfahren nach einem der Ansprüche 1 bis 8, **dadurch gekennzeichnet, dass** der Katalysator (8) in dem Reaktor (3a, b) als vorzugsweise stationäre oder quasi-stationäre Schüttung angeordnet ist, insbesondere, dass der Katalysator (8) als Schüttung in mehreren getrennten Katalysatorschichten angeordnet ist.

10. Verfahren nach einem der Ansprüche 1 bis 8, **dadurch gekennzeichnet, dass** der Katalysator (8) in dem Reaktor (3a, b) als Schüttung angeordnet ist, wobei an einem vertikal unteren Ende des Reaktors (3a, b) insbesondere deaktivierter Katalysator (8) sukzessive abgeführt und an einem vertikal oberen Ende des Reaktors (3a, b) frischer Katalysator (8), vorzugsweise aus einer Anordnung zur Regeneration von deaktiviertem Katalysator (8), zugeführt wird.

11. Verfahren nach einem der Ansprüche 1 bis 10, **dadurch gekennzeichnet, dass** bei der Umsetzung der Ausgangskohlenwasserstoffe in die Produktkohlenwasserstoffe auftretende Reaktionen eine auf die Masse bezogene Bruttoreaktionsenthalpie von mindestens 50 kJ/kg, vorzugsweise auch von höchstens 200 kJ/kg, aufweisen.

12. Verfahren nach einem der Ansprüche 1 bis 11, **dadurch gekennzeichnet, dass** die Ausgangskohlenwasserstoffe jeweils Ketten mit mehr als 12 Kohlenstoffatomen aufweisen und dass die Produktkohlenwasserstoffe jeweils Ketten mit zwischen 6 und 18 Kohlenstoffatomen aufweisen, vorzugsweise, dass die Produktkohlenwasserstoffe überwiegend in einer Flüssigphase im Produktstrom (4) vorliegen.

13. Verfahren nach einem der Ansprüche 1 bis 12, **dadurch gekennzeichnet, dass** das Heizgas (10a, b), vorzugsweise die Heizgase (10a, b), einen Heizgasstoff aufweist, insbesondere im Wesentlichen aus dem Heizgasstoff besteht, welcher bezogen auf die katalytische Umsetzung der Ausgangskohlenwasserstoffe in die Produktkohlenwasserstoffe inert ist, weiter vorzugsweise, dass der Heizgasstoff Stickstoff, Kohlenstoffdioxid, Kohlenstoffmonoxid und/oder Wasser umfasst, weiter insbesondere, aus einem oder mehreren dieser Stoffe besteht.

14. Verfahren nach einem der Ansprüche 1 bis 13, **dadurch gekennzeichnet, dass** der Produktstrom (4) einer Kondensationsstufe zum zumindest teilweisen Abtrennen der Produktkohlenwasserstoffe zugeführt wird, dass aus der Kondensationsstufe ein rezyklierter Strom mit unreagierten Ausgangskohlenwasserstoffen und/oder Produktkohlenwasserstoffen gewonnen wird und dass das Heizgas (10a, b), vorzugsweise die Heizgase (10a, b), den rezyklierten Strom umfasst, insbesondere aus dem rezyklierten Strom besteht.

15. Reaktor (3a, b) zur endothermen katalytischen Umsetzung von verketteten Ausgangskohlenwasserstoffen in verkettete Produktkohlenwasserstoffe mit einem Einlass (2) für den Eintritt eines gasförmigen Speisestroms (1) mit den Ausgangskohlenwasserstoffen, mit einem Auslass (5) für des Austritt eines Produktstroms (4) mit den Produktkohlenwasserstoffen und mit einem Katalysator (8) als Feststoff zur heterogenen Katalyse der endothermen Umsetzung der Ausgangskohlenwasserstoffe in die Produktkohlenwasserstoffe, welcher Katalysator (8) in einem Reaktionsabschnitt (6) angeordnet ist, welcher Reaktionsabschnitt (6) entlang einer Reaktorstrecke (7) zwischen dem Einlass (2) und dem Auslass (5) in dem Reaktor (3a, b) verläuft und wobei der Katalysator (8) von dem Speisestrom (1) als Prozessstrom durchströmt wird **dadurch gekennzeichnet, dass** der Reaktor (3a, b) einen zwischen dem Einlass (2) und dem Auslass (5) angeordneten und zu diesen beabstandeten Heizeinlass (10a, b) zur Zuführung eines Heizgases (9a, b), welches der Temperaturerhöhung dient, in den Reaktor (3a, b) zur Vermischung mit dem Prozessstrom aufweist.
